# EUROPÄISCHE PATENTSCHRIFT

(11) **EP 2 740 136 B1**
(45) Veröffentlichungstag und Bekanntmachung des Hinweises auf die Patenterteilung: **08.07.2015**
(21) Anmeldenummer: 12743079.1
(22) Anmeldetag: 26.07.2012
(51) Int. Cl.: H01H 33/34, H01H 3/60, H01H 3/24, F16F 9/49

(54) **DIFFERENTIALZYLINDER FÜR EINEN HYDROMECHANISCHEN ANTRIEB FÜR ELEKTRISCHE LEISTUNGSSCHALTER**
DIFFERENTIAL FOR A HYDRO-MECHANICAL DRIVE FOR ELECTRIC POWER SWITCHES
DIFFÉRENTIEL POUR ENTRAÎNEMENT HYDROMÉCANIQUE POUR DISJONCTEURS ÉLECTRIQUES

(30) Priorität: 03.08.2011 DE 102011109227
(43) Veröffentlichungstag der Anmeldung: 11.06.2014
(73) Patentinhaber: ABB Technology AG, 8050 Zürich (CH)
(72) Erfinder: SCHMIDT, Matthias, 60596 Frankfurt (DE)
(74) Vertreter: Kock, Ina
(86) Internationale Anmeldenummer: PCT/EP2012/003168
(87) Internationale Veröffentlichungsnummer: WO 2013/017227

(56) Entgegenhaltungen:
- DE-A1- 4 404 834
- DE-A1-102008 004 063
- DE-A1-102009 015 881
- US-A- 3 885 454
- US-A1- 2009 020 508

## Beschreibung

Die Erfindung betrifft hydraulische Differentialzylinder für hydromechanische Antriebe für elektrische Leistungsschalter.

Hydromechanische Federspeicherantriebe weisen üblicherweise Differentialzylinder auf. Ein Kolben des Differentialzylinders ist mit einer Kolbenstange verbunden, die durch Druckbeaufschlagung eines Druckvolumens bewegbar ist. Weiterhin ist die Kolbenstange mit einem elektrischen Leistungsschalter verbunden, so dass durch Bewegen der Kolbenstange der elektrische Leistungsschalter geschaltet werden kann. Beispielsweise kann zum Öffnen des elektrischen Leistungsschalters das Druckvolumen des Differentialzylinders mit einem hydraulischen Druck beaufschlagt werden, so dass sich die Kolbenstange in eine entsprechende Position bewegt.

Der Druck in dem Druckvolumen wird üblicherweise von einem Druckzylinder bereitgestellt, der mit einem mechanischen Energiespeicher, wie beispielsweise einer Federanordnung, gekoppelt ist. Soll der Leistungsschalter geschaltet werden, wird die Federkraft auf den Druckzylinder freigegeben, so dass sich dort ein Arbeitsdruck aufbaut, der über eine hydraulische Verbindung auch in dem Druckvolumen des Differentialzylinders vorliegt. Durch den Arbeitsdruck in dem Druckbereich werden der Kolben und die Kolbenstange des Differentialzylinders bewegt.

Wenn der mechanische Energiespeicher an dem Druckzylinder als Federanordnung ausgebildet ist, wird dieser üblicherweise zum Bereitstellen einer ausreichenden Kraft mit einer Vorspannung beaufschlagt. Beim Auslösen der Federanordnung baut sich der Arbeitsdruck sehr schnell auf, so dass der Druckbereich des Differentialzylinders beinahe unmittelbar mit dem Arbeitsdruck beaufschlagt wird. Dadurch wird der Kolben des Differentialzylinders mit einer hohen Beschleunigungskraft in Richtung eines Endanschlags bewegt. Zur Schonung des Differentialzylinders und der weiteren damit gekoppelten mechanischen Bauteile ist daher häufig eine Endlagendämpfung vorgesehen, bei der die Geschwindigkeit des Kolbens reduziert wird, bevor dieser oder ein weiteres Bauteil an einem Anschlag anschlägt. Die Dämpfung soll bewirken, dass die Endgeschwindigkeit des Kolbens beim Anschlagen unterhalb eines vorgegebenen Schwellwertes gebracht wird, um eine Beschädigung der Bauteile zu vermeiden.

Abhängig vom Einsatzfall und vom Typ des zu schaltenden Leistungsschalters, der Auslösegeschwindigkeit, des bereitgestellten Arbeitsdrucks und dergleichen muss für jede Anwendung individuell eine eigene geometrische Auslegung der Dämpfung erfolgen. Dadurch sind die hydromechanischen Federspeicherantriebe bereits zu Beginn der Fertigung auf eine bestimmte Anwendung festgelegt. Ein Wechsel des Anwendungsbereichs ist nach ihrer Herstellung in der Regel nicht mehr ohne Weiteres möglich. Dies macht die Herstellung der hydromechanischen Federspeicherantriebe unflexibel, da diese nur gezielt für einen bestimmten Anwendungsfall hergestellt werden können und es nicht möglich ist, sie für eine Reihe unbestimmter Anwendungen auf Vorrat zu produzieren und nach ihrer Herstellung an den gegebenen Anwendungsfall anzupassen.

Die US 3,885,454 beschreibt einen hydraulisch betriebenen Antrieb für einen Leistungsschalter, bei dem ein hydraulischer Hochdruckspeicher die zum Schalten erforderliche Energie bereitstellt, wobei der Druck im Hochdruckspeicher durch eine Pumpe aufrechterhalten wird. Der Antrieb enthält einen Differentialzylinder mit Endlagendämpfung wie oben für hydromechanische Federspeicherantriebe beschrieben, wobei der Kolben ein zapfenförmiges Ende aufweist, welches vor Erreichen des Endanschlags durch den Kolben in eine Bohrung eindringt. Die Hydraulikflüssigkeit kann dann nur noch durch eine Bypassleitung mit einstellbarem Querschnitt entweichen, wodurch eine Dämpfung erzielt wird.

Es ist wünschenswert, einen hydromechanischen Federspeicherantrieb zu schaffen, der eine Endlagendämpfung aufweist, die ungeachtet des von dem mechanischen Energiespeicher bereitgestellten Arbeitsdrucks und ungeachtet der mit der Kolbenstange bewegten Masse so abgebremst werden kann, dass eine Endgeschwindigkeit der Kolbenstange unter einem vorgegebenen Schwellenwert erreicht wird, bevor der Kolben, die Kolbenstange oder ein damit verbundenes Bauteil an einem Endanschlag anschlägt.

Es ist somit Aufgabe der vorliegenden Erfindung, einen hydromechanischen Antrieb zum Betätigen eines elektrischen Leistungsschalters zur Verfügung zu stellen, bei dem die Höhe der Endlagendämpfung reguliert wird.

Diese Aufgabe wird durch den Differentialzylinder für einen hydromechanischen Antrieb zum Betätigen eines elektrischen Leistungsschalters gemäß Anspruch 1 sowie durch den hydromechanischen Antrieb gemäß Anspruch 9 gelöst.

Weitere vorteilhafte Ausgestaltungen der vorliegenden Erfindung sind in den abhängigen Ansprüchen angegeben.

Gemäß einem ersten Aspekt ist ein Differentialzylinder für einen hydromechanischen Antrieb zur Betätigung eines elektrischen Schalters, insbesondere eines Hochspannungsschalters, vorgesehen.

Der Differentialzylinder umfasst:
- einen ersten Druckbereich zum Beaufschlagen mit einem Arbeitsdruck;
- einen zweiten Druckbereich;
- einen in einem Bewegungsbereich beweglichen Kolben, der abhängig von einer Druckdifferenz zwischen dem ersten und dem zweiten Druckbereich bewegbar ist;
wobei eine Dämpfungseinrichtung vorgesehen ist, die bei einer Bewegung des Kolbens in Richtung des zweiten Druckbereichs in einem Abschnitt des Bewegungsbereichs eine zusätzliche Dämpfung, auch Endlagendämpfung genannt, gegen die Bewegung des Kolbens bereitstellt, wobei die zusätzliche Dämpfung sich selbsttätig einstellt.

Die Dämpfungseinrichtung weist eine Dämpfungskammer auf, an deren Boden Öldurchlässe angeordnet sind. Unterhalb der Öldurchlässe ist ein fest eingespanntes federnde Eigenschaften aufweisendes Verschlusselement angeordnet, welches mit einem anstehenden Dämpfungsdruck auf den von ihm verschlossenen Öldurchlass beaufschlagt ist und den Dämpfungsdruck regelt.

Eine Idee des obigen Differentialzylinders für einen hydromechanischen Antrieb besteht darin, eine Dämpfung einer Bewegung des Kolbens in einem Abschnitt (Teilbereich) des Bewegungsbereichs des Kolbens vorzusehen, um die Geschwindigkeit des Kolbens vor Erreichen eines Endanschlags zu reduzieren.

Durch Vorsehen einer selbsttätig einstellbaren Dämpfung ist es möglich, den Differentialzylinder unabhängig von der Kenntnis des späteren Systems, in dem dieser eingesetzt wird, auszubilden.

Auf diese Weise ist eine weitestgehend anwendungsneutrale Fertigung von derartigen hydromechanischen Antrieben möglich, die ohne Kenntnis der Endanwendung erfolgen kann.

Weiterhin kann die Dämpfungseinrichtung eine Dämpfungskammer an einem dem Kolben gegenüberliegenden Ende des zweiten Druckbereichs und einen an dem Kolben in Richtung des zweiten Druckbereichs hervorstehenden Dämpfungszapfen aufweisen, wobei der Dämpfungszapfen und die Dämpfungskammer so ausgebildet sind, dass der Dämpfungszapfen in einem Abschnitt des Bewegungsbereichs in die Dämpfungskammer hineinragt und damit den zweiten Druckbereich von der Dämpfungskammer trennt.

Dadurch kann erreicht werden, dass in einem ersten Abschnitt des Bewegungsbereichs des Kolbens keine nennenswerte Dämpfung hervorgerufen wird. Erst in einem zweiten Abschnitt des Bewegungsbereichs, wenn der Dämpfungszapfen durch die Bewegung des Kolbens in eine Dämpfungskammer gelangt, wird das in der Dämpfungskammer befindliche Fluid eingeschlossen, so dass dieses nur durch einen reduzierten Durchlassquerschnitt aus der Dämpfungskammer ausströmen kann. In Folge ist die Dämpfung gegenüber der Bewegung des Kolbens in dem ersten Kolbenbereich deutlich erhöht.

Gemäß der vorliegenden Erfindung stellt sich der Querschnitt, durch den die Hydraulikflüssigkeit aus der Dämpfungskammer ausströmen kann, selbsttätig ein, so dass der hydromechanische Antrieb auf den Anwendungsfall, d. h. auf die Ausgangsgeschwindigkeit des Kolbens, die auf den Kolben wirkende Kraft, die Maximalgeschwindigkeit des Kolbens und die Masse der mit der Kolbenstange verbundenen Elemente, ohne äußere Eingriffe einstellt wird, um das gewünschte Schaltverhalten des mit dem hydromechanischen Antrieb betätigten Leistungsschalters zu erreichen.

Dazu sind der Dämpfungszapfen und die Dämpfungskammer so ausgebildet, dass nach dem Eindringen des Dämpfungszapfens in die Dämpfungskammer ein Restspalt verbleibt, der einen vorgegebenen Durchlassquerschnitt aufweist.

Insbesondere kann der vorgegebene Durchlassquerschnitt so gewählt werden, dass dieser eine vorgegebene maximale Dämpfung gegen die Bewegung des Kolbens bewirkt.

Am Boden der Dämpfungskammer ist erfindungsgemäß ein in axialer Richtung zur Bewegungsrichtung des Kolbens bewegliches Verschlusselement, vorzugsweise ein scheibenförmiges Element, angeordnet, welches bei einer Bewegung des Kolbens in Richtung des zweiten Druckbereichs in den Abschnitt des Bewegungsbereichs den Querschnitt von darunter befindlichen bzw. angeordneten Durchlässen für eine Hydraulikflüssigkeit, nachfolgend auch Öldurchlässe genannt, verändert.

In einer bevorzugten Ausführungsform der Erfindung ist der Querschnitt wenigstens einer der Öldurchlässe so ausgebildet, dass das Verschlusselement bei einer Bewegung des Kolbens in Richtung des zweiten Druckbereiches diesen Öldurchlass verschließt. Der Querschnitt wenigstens einer der weiteren Öldurchlässe ist so ausgebildet, dass das scheibenförmige Element diesen Öldurchlass nicht vollständig verschließt und somit ein Spalt gebildet ist, durch den die Hydraulikflüssigkeit hindurchströmt.

Das bewegliche scheibenförmige Element und der Öldurchlass, der vom beweglichen Verschlusselement verschlossen wird, wirken dabei als Rückschlagventil und das bewegliche scheibenförmige Element bewirkt somit die zusätzliche Dämpfung gegen die Bewegung des Kolbens dadurch, dass das axial bewegliche scheibenförmige Element an den Boden der Dämpfungskammer angepresst wird.

Ein, vorzugsweise als Federscheibe ausgeführtes, fest eingespanntes vorzugsweise scheibenförmiges, Verschlusselement ist unterhalb der Durchlässe für die Hydraulikflüssigkeit angeordnet. Das fest eingespannte Element weist federnde Eigenschaften auf und ist mit einem anstehenden Dämpfungsdruck auf die von ihm verschlossenen Öldurchlässen beaufschlagbar. Das fest eingespannte Verschlusselement regelt somit in vorteilhafter Weise den Dämpfungsdruck.

Bei einer Bewegung des Kolbens in Richtung des zweiten Druckbereichs steht damit der Dämpfungsdruck auf den vom fest eingespannten scheibenförmigen Element verschlossenen Öldurchlässen an.

Wenn sich die Kraft auf der Fläche des fest eingespannten scheibenförmigen Elements erhöht, biegt sich das fest eingespannte scheibenförmige Element nach unten auf und gibt einen Querschnitt frei, durch den Hydraulikflüssigkeit in einen mit den Durchlässen für die Hydraulikflüssigkeit verbundenen Tankanschluss zu einem Hydraulikflüssigkeitsbehälter abfließen kann. Je höher der Dämpfungsdruck ist, desto größer ist der freigegebene Querschnitt. Sinkt der Dämpfungsdruck durch einen erhöhten Hydraulikflüssigkeitsabfluss, verringert sich auch die Durchbiegung des fest eingespannten scheibenförmigen Elements und der freie Querschnitt wird wieder verringert. Somit wird ein Abbremsen des Kolbens erreicht ohne dass ein bestimmter Maximaldruck überschritten wird.

Bei gegenläufiger Bewegung des Kolbens (aus der Dämpfungskammer heraus) hebt das axial frei bewegliche scheibenförmige Element ab und gibt den maximalen Querschnitt frei. Die Hydraulikflüssigkeit kann so ungehindert in die Dämpfungskammer einströmen und die Beschleunigung des Kolbens wird nicht behindert. Dabei wirkt das fest eingespannte scheibenförmige Element in Verbindung mit dem Öldurchlass, der vom fest eingespannten scheibenförmigen Element an seinem zum Tankanschluss weisendem Ende diesen verschlossen wird, als Drosselrückschlagventil.

In einer besonders vorteilhaften Ausführungsform des erfindungsgemäßen Differenzialzylinders sind zwei Durchlässe für die Hydraulikflüssigkeit vorgesehen, jedoch kann die Anzahl der Öldurchlässe auch größer sein.

Bevorzugt sind die Öldurchlässe jeweils aus einem ersten und einem zweiten Teilbereich aufgebaut, wobei der erste Teilbereich des Öldurchlasses, der vom beweglichen scheibenförmigen Element nicht vollständig verschlossen wird, einen größeren Querschnitt aufweist als dessen zweiter Teilbereich, der vom fest eingespannten federnden Element abgedeckt wird.

Der erste Teilbereich des Öldurchlasses, der vom beweglichen scheibenförmigen Element vollständig verschlossen wird, weist einen kleineren Querschnitt auf als dessen zweiter Teilbereich, der vom fest eingespannten federnden Element abgedeckt wird.

Gemäß einem weiteren Aspekt ist ein hydromechanischer Antrieb mit dem obigen Differentialzylinder vorgesehen, der bevorzugt in Hochspannungsleistungsschaltern eingesetzt wird.

Eine bevorzugte Ausführungsform der vorliegenden Erfindung wird nachfolgend anhand der beigefügten Zeichnung näher erläutert. Es zeigt:

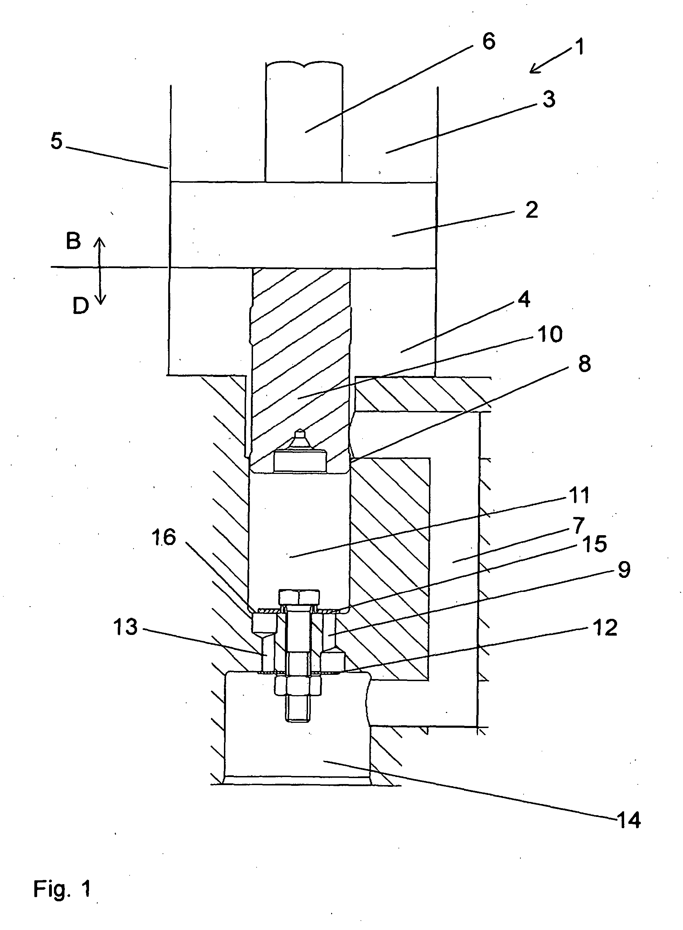

- Fig. 1: eine schematische Querschnittsdarstellung durch einen hydraulischen Differentialzylinder mit einer Endlagendämpfung gemäß einer bevorzugten Ausführungsform.

**Fig. 1** zeigt eine schematische Querschnittsdarstellung eines hydraulischen Differentialzylinders 1 mit einem Kolben 2, der einen ersten Druckbereich 3 von einem zweiten Druckbereich 4 trennt. Der Kolben 2 ist beweglich in einem Zylinderinnenraum 5 angeordnet, wobei der Kolben 2 den ersten und den zweiten Druckbereich 3, 4 hermetisch voneinander trennt. Der erste Druckbereich 3 ist durch einen Arbeitsdruck beaufschlagbar.

Der Arbeitsdruck kann beispielsweise von einem separaten Druckzylinder (nicht gezeigt) bereitgestellt werden, der durch das Freigeben eines mechanischen Energiespeichers, wie beispielsweise einer vorgespannten Teller- oder Schraubenfeder, auf einen Kolben 2 des Druckzylinders bewirkt werden kann.

Der hydraulische Differentialzylinder 1 dient zum Bereitstellen einer Auslösebewegung. Dazu ist der Kolben 2 des Differentialzylinders 1 mit einer Kolbenstange 6 verbunden, die als Aktuator direkt oder indirekt ein Öffnen bzw. Schließen eines elektrischen Leistungsschalters bewirkt.

Bei Einwirken des Arbeitsdrucks in dem ersten Druckbereich 3 bewegt sich der Kolben 2 entsprechend der Druckdifferenz zwischen dem ersten und dem zweiten Druckbereich 3, 4 so, dass sich das Volumen des zweiten Druckbereichs 4 verkleinert, wobei die in dem zweiten Druckbereich 4 befindliche Hydraulikflüssigkeit über die Hydraulikleitung 7 direkt in einen Hydraulikflüssigkeitsbehälter (nicht gezeigt) abfließt und deshalb keinen wesentlichen Gegendruck auf den Kolben 2 ausübt. Beim Auslösen des hydromechanischen Antriebs wird der Kolben 2 des Differentialzylinders 1 beschleunigt, wobei der zweite Druckbereich 4 nicht zum Verringern der Geschwindigkeit des Kolbens 2 beiträgt. Auf diese Weise kann ein mithilfe des hydromechanischen Antriebs vorgenommener Schaltvorgang mit einer gewünschten Geschwindigkeit durchgeführt werden, so dass schnelle Auslösevorgänge möglich sind.

Es soll vermieden werden, dass der durch den Auslösevorgang beschleunigte Kolben 2 des Differentialzylinders 1 oder ein damit verbundenes Bauteil ungebremst an einem Endanschlag anschlägt, da dieser dadurch beschädigt werden kann und zudem störende Geräusche entstehen können. Aus diesem Grund ist eine Endlagendämpfung vorgesehen. Die Endlagendämpfung ist mithilfe eines zylindrischen, insbesondere kreiszylindrischen, Dämpfungszapfens 10 ausgebildet, der während einer Bewegung des Kolbens 2 in einem Bewegungsbereich B des Innenraums 5 passiv ist und eine Dämpfung der Bewegung des Kolbens 2 bewirkt, sobald sich der Kolben 2 bei weiterer Verringerung des Volumens des zweiten Druckbereichs 4 in einem Dämpfungsbereich D bewegt. Die Position, die den Übergang zwischen dem Bewegungsbereich B und dem Dämpfungsbereich D darstellt, ist bei Verringerung des Volumens des zweiten Druckbereichs 4 durch den Eintritt des Dämpfungszapfens 10 in eine ebenfalls zylindrische Dämpfungskammer 11 definiert.

Die Dämpfungskammer 11 und der Dämpfungszapfen 10 weisen Querschnitte auf, die bei Eindringen des Dämpfungszapfens 10 in die Dämpfungskammer 11 einen Restspalt 8 lassen, durch den Hydraulikflüssigkeit aus der Dämpfungskammer 11 in den zweiten Druckbereich 4 austreten kann. Auf diese Weise wird durch den Restspalt 8 eine Drosselwirkung realisiert, da die in der Dämpfungskammer 11 eingeschlossene Hydraulikflüssigkeit über den zweiten Druckbereich 4 in den Hydraulikflüssigkeitsbehälter gelangen kann.

Die Hydraulikleitung 7 zum Ableiten der Hydraulikflüssigkeit aus dem zweiten Druckbereich 4 steht somit bis auf den Restspalt 8 nicht mehr in direkter fluidischer Verbindung mit der in der Dämpfungskammer 11 eingeschlossenen Hydraulikflüssigkeit.

Um dies zu gewährleisten ist der Querschnitt des Dämpfungszapfens 10 kleiner als der Querschnitt der Dämpfungskammer 11 ausgebildet, um den Restspalt 8 für den Durchtritt von Hydraulikflüssigkeit zu gewährleisten. Der effektive Durchlassquerschnitt des Restspalts kann so gewählt sein, dass eine Dämpfung der Bewegung des Kolbens 2 mit einer maximal einstellbaren Dämpfung ermöglicht wird. Die maximal einstellbare Dämpfung kann beispielsweise bei der Auslegung des hydraulischen Antriebs vorgegeben sein. So ist beispielsweise ein Durchlassquerschnitt von 0,5% bis 5% der Querschnittsfläche des Dämpfungszapfens 10 möglich.

Am Boden der Dämpfungskammer 11 ist ein in axialer Richtung zur Bewegungsrichtung des Kolbens 2 bewegliches Verschlusselement 15, welches vorzugsweise als scheibenförmiges Element oder kugelförmiges Element ausgeführt ist, angeordnet. Das bewegliche Verschlusselement 15 kann auch eine bewegliche Federscheibe sein. Das bewegliche Verschlusselement 15 verändert den Querschnitt von darunter befindlichen bzw. angeordneten Öldurchlässen 9, 13 bei einer Bewegung des Kolbens 2 in Richtung des zweiten Druckbereichs 4 in den Abschnitt D des Bewegungsbereichs.

Der Querschnitt des Öldurchlasses 9 ist so ausgebildet, dass das bewegliche scheibenförmige Element 15 bei einer Bewegung des Kolbens 2 in Richtung des zweiten Druckbereiches diesen Öldurchlass 9 verschließt. Der Querschnitt des weiteren Öldurchlasses 13 ist so ausgebildet, dass das bewegliche scheibenförmige Element 15 diesen weiteren Öldurchlass 13 nicht vollständig verschließt und somit ein Spalt 16 gebildet ist, durch den die Hydraulikflüssigkeit hindurchströmen kann.

Das bewegliches scheibenförmiges Element 15 und der Öldurchlass 9, der vom beweglichen scheibenförmigen Element 15 vollständig verschlossen wird, wirken dabei als Rückschlagventil und das bewegliche scheibenförmige Element 15 bewirkt eine zusätzliche Dämpfung gegen die Bewegung des Kolbens 2 dadurch, dass das axial bewegliche scheibenförmige Element 15 an den Boden der Dämpfungskammer 11 angepresst wird. Dadurch wird der in Verbindung mit dem beweglichen scheibenförmigen Element 15 als Rückschlagventil dienende Öldurchlass 9 verschlossen.

Ein fest eingespanntes Verschlusselement 12, vorzugsweise als Federscheibe oder federndes scheibenförmiges Element ausgeführt, ist unterhalb der Öldurchlässe 9, 13 für die Hydraulikflüssigkeit angeordnet.

Die Federscheibe 12 wird bei einem anstehenden Dämpfungsdruck auf den von ihm verschlossenen Öldurchlass 13 beaufschlagt, so dass der Dämpfungsdruck auf den von der Federscheibe 12 verschlossenen Durchlass 13 ansteht.

Die Öldurchlässe 9, 13 sind jeweils aus einem ersten und einem zweiten Teilbereich aufgebaut, wobei der erste Teilbereich des Öldurchlasses 13 vom beweglichen scheibenförmigen Element 9 nicht vollständig verschlossen wird und einen größeren Querschnitt aufweist als dessen zweiter Teilbereich, der vom fest eingespannten federnden Element 12 abgedeckt wird.

Der erste Teilbereich des Öldurchlasses 9, der vom beweglichen scheibenförmigen Element 15 vollständig verschlossen wird, weist einen kleineren Querschnitt auf als dessen zweiter Teilbereich, der vom fest eingespannten federnden Element 12 teilweise abgedeckt wird.

Wenn sich die Kraft auf der Fläche der Federscheibe 12 erhöht, biegt sie sich nach unten auf und gibt einen Querschnitt frei, durch den Hydraulikflüssigkeit in einen mit den Öldurchlass 13 verbundenen Tankanschluss 14 zu einem Hydraulikflüssigkeitsbehälter abfließen kann.

Je höher der Dämpfungsdruck ist, desto größer ist der freigegebene Querschnitt. Sinkt der Dämpfungsdruck durch einen erhöhten Ölabfluss, verringert sich auch die Durchbiegung der Federscheibe 12 und der freie Querschnitt wird wieder verringert. Somit wird ein Abbremsen des Kolbens 2 erreicht ohne dass ein bestimmter Maximaldruck überschritten wird.

Wird der Kolben 2 in eine gegenläufiger Bewegung aus der Dämpfungskammer herausgeführt, hebt die axial frei bewegliche Federscheibe 15 ab, bewegt sich in Richtung des Kolbens 2 und gibt dabei den maximalen Querschnitt der Durchführungen 9, 13 für das Hydrauliköl frei.

Durch das Vorsehen eines in axialer Richtung zur Bewegung des Kolbens 2 beweglichen scheibenförmigen Elementes 15 am Boden der Dämpfungskammer 11 zur oberen Abdeckung des Durchlasses 9 für die Hydraulikflüssigkeit und des fest eingespannten scheibenförmigen Elements 12 unterhalb der Öldurchlässe 9, 13 stellt sich eine Dämpfung des Kolbens 2 selbsttätig ein, so dass die Differentialzylinder anwendungsunabhängig gefertigt werden können.

### Bezugszeichenliste

- 1: Differentialzylinder
- 2: Kolben
- 3: erster Druckbereich
- 4: zweiter Druckbereich
- 6: Kolbenstange
- 7: Hydraulikleitung
- 8: Restspalt
- 9: Öldurchlass für eine ungehinderte Bewegung des Dämpfungszapfens nach oben
- 10: Dämpfungszapfen
- 11: Dämpfungskammer
- 12: fest eingespanntes Verschlusselement, fest eingespanntes scheibenförmiges Element, fest eingespannte Federscheibe
- 13: Öldurchlass mit veränderlichem Querschnitt für Dämpfung
- 14: Tankanschluss zu einem Hydraulikflüssigkeitsbehälter
- 15: bewegliches Verschlusselement, in axialer Richtung bewegliche Scheibe, bewegliche Federscheibe
- 16: Spalt

## Patentansprüche

1. Differentialzylinder (1) für einen hydromechanischen Antrieb zur Betätigung eines elektrischen Schalters, insbesondere eines Hochspannungsschalters, umfassend:
- einen ersten Druckbereich (3) zum Beaufschlagen mit einem Arbeitsdruck;
- einen zweiten Druckbereich (4);
- einen in einem Bewegungsbereich beweglichen Kolben (2), der abhängig von einer Druckdifferenz zwischen dem ersten und dem zweiten Druckbereich (3, 4) bewegbar ist;
- eine Dämpfungseinrichtung, die bei einer Bewegung des Kolbens (2) in Richtung des zweiten Druckbereichs (4) in einem Abschnitt (D) des Bewegungsbereichs eine zusätzliche Dämpfung gegen die Bewegung des Kolbens (2) bereitstellt, wobei sich die zusätzliche Dämpfung selbsttätig einstellt, **dadurch gekennzeichnet, dass**
die Dämpfungseinrichtung eine Dämpfungskammer (11) aufweist, an deren Boden Öldurchlässe (9, 13) angeordnet sind, ein fest eingespanntes federnde Eigenschaften aufweisendes Verschlusselement (12) unterhalb der Öldurchlässe (9, 13) angeordnet ist und das fest eingespannte Verschlusselement (12) mit einem anstehenden Dämpfungsdruck auf den von ihm verschlossenen Öldurchlass (13) beaufschlagt ist und den Dämpfungsdruck regelt.

2. Differentialzylinder nach Anspruch 1, wobei das fest eingespannte Verschlusselement (12) als Federscheibe ausgeführt ist.

3. Differentialzylinder (1) nach Anspruch 1, wobei die Dämpfungseinrichtung eine Dämpfungskammer (11) an einem dem Kolben (2) gegenüberliegenden Ende des zweiten Druckbereichs (4) und einen an dem Kolben (2) in Richtung des zweiten Druckbereichs hervorstehenden Dämpfungszapfen (10) aufweist, wobei der Dämpfungszapfen (10) und die Dämpfungskammer (11) so ausgebildet sind, dass der Dämpfungszapfen (10) in einem Abschnitt (D) des Bewegungsbereichs in die Dämpfungskammer (11) hineinragt und damit den zweiten Druckbereich (4) von der Dämpfungskammer (11) trennt.

4. Differentialzylinder nach Anspruch 3, wobei der Dämpfungszapfen (10) und die Dämpfungskammer (11) so ausgebildet sind, dass nach dem Eindringen des Dämpfungszapfens (10) in die Dämpfungskammer (11) ein Restspalt (8) verbleibt, der einen vorgegebenen Durchlassquerschnitt aufweist.

5. Differentialzylinder nach Anspruch 4, wobei der vorgegebene Durchlassquerschnitt so gewählt ist, dass dieser eine vorgegebene maximale Dämpfung gegen die Bewegung des Kolbens (2) bewirkt.

6. Differentialzylinder nach Anspruch 5, wobei am Boden der Dämpfungskammer (11) das zur Bewegungsrichtung des Kolbens (2) bewegliches Verschlusselement (15) bei einer Bewegung des Kolbens (2) in Richtung des zweiten Druckbereichs (4) in den Abschnitt (D) des Bewegungsbereichs den Querschnitt des Durchlasses (9) verschließt oder teilweise verschließt.

7. Differentialzylinder nach Anspruch 5, wobei der Querschnitt wenigstens einer der Öldurchlässe (9) so ausgebildet ist, dass das bewegliche Verschlusselement (15) bei einer Bewegung des Kolbens in Richtung des zweiten Druckbereiches diesen Öldurchlass (9) verschließt und der Querschnitt wenigstens einer der weiteren Öldurchlässe (13) so ausgebildet ist, dass das bewegliche Verschlusselement (15) diesen (13) Öldurchlass nicht vollständig verschließt und somit ein Spalt (16) gebildet ist, durch den die Hydraulikflüssigkeit hindurchströmt.

8. Differentialzylinder nach einem der Ansprüche 5 bis 7, wobei das bewegliche Verschlusselement (15) und der Öldurchlass (9), der vom scheibenförmigen Element (15) vollständig oder teilweise verschlossen wird, als Rückschlagventil wirken.

9. Hydromechanischer Antrieb für einen Hochspannungsleistungsschalter mit einem Differentialzylinder (1) nach einem der vorangehenden Ansprüche.

## Claims

1. Differential cylinder (1) for a hydromechanical drive for actuating an electrical switch, in particular a high-voltage switch, comprising:
- a first pressure region (3) for supplying with a working pressure;
- a second pressure region (4);
- a piston (2), which is capable of moving in a range of movement and which is movable depending on a pressure difference between the first and second pressure regions (3, 4);
- a damping device which, in the event of a movement of the piston (2) in the direction of the second pressure region (4), provides additional damping with respect to the movement of the piston (2) in a section (D) of the range of movement, wherein the additional damping is set automatically, **characterized in that** the damping device has a damping chamber (11), at the bottom of which oil passages (9, 13) are arranged, a closure element (12), which is clamped securely in place and has spring properties, is arranged underneath the oil passages (9, 13), and the closure element (12) clamped securely in place is subjected to a prevailing damping pressure on the oil passage (13) closed by it and regulates the damping pressure.

2. Differential cylinder according to Claim 1, wherein the closure element (12) clamped securely in place is embodied as a spring washer.

3. Differential cylinder (1) according to Claim 1, wherein the damping device has a damping chamber (11) at an opposite end of the second pressure region (4) from the piston (2) and has a damping pin (10) projecting on the piston (2) in the direction of the second pressure region, wherein the damping pin (10) and the damping chamber (11) are designed in such a way that the damping pin (10) projects into the damping chamber (11) in a section (D) of the range of movement and thus separates the second pressure region (4) from the damping chamber (11).

4. Differential cylinder according to Claim 3, wherein the damping pin (10) and the damping chamber (11) are designed in such a way that, after the penetration of the damping pin (10) into the damping chamber (11), there remains a residual gap (8), which has a predetermined passage cross section.

5. Differential cylinder according to Claim 4, wherein the predetermined passage cross section is chosen in such a way that it brings about a predetermined maximum damping with respect to the movement of the piston (2).

6. Differential cylinder according to Claim 5, wherein, in the event of a movement of the piston (2) in the direction of the second pressure region (4), into the section (D) of the range of movement, the closure element (15) that can be moved to the direction of movement of the piston (2) closes or partially closes the cross section of the passage (9) at the bottom of the damping chamber (11).

7. Differential cylinder according to Claim 5, wherein the cross section of at least one of the oil passages (9) is designed in such a way that, in the event of a movement of the piston in the direction of the second pressure region, the movable closure element (15) closes said oil passage (9), and the cross section of at least one of the further oil passages (13) is designed in such a way that the movable closure element (15) does not fully close this oil passage (13), and hence a gap (16) is formed, through which the hydraulic fluid flows.

8. Differential cylinder according to one of Claims 5 to 7, wherein the movable closure element (15) and the oil passage (9), which is fully or partially closed by the disk-shaped element (15), act as a check valve.

9. Hydromechanical drive for a high-voltage circuit breaker having a differential cylinder (1) according to one of the preceding claims.

## Revendications

1. Vérin différentiel (1) pour un mécanisme d'entraînement hydromécanique destiné à actionner un commutateur électrique, notamment un commutateur à haute tension, comprenant :
- une première zone de pression (3) destinée à être chargée avec une pression de travail ;
- une deuxième zone de pression (4) ;
- un piston (2) mobile dans une zone de déplacement, lequel peut se déplacer en fonction d'une différence de pression entre la première et la deuxième zone de pression (3, 4) ;
- un dispositif d'amortissement qui, lors d'un déplacement du piston (2) en direction de la deuxième zone de pression (4) dans une portion (D) de la zone de déplacement, fournit un amortissement supplémentaire contre le déplacement du piston (2), l'amortissement supplémentaire se réglant automatiquement, **caractérisé en ce que**
le dispositif d'amortissement possède une chambre d'amortissement (11) sur le fond de laquelle sont disposés des passages à huile (9, 13), un élément de fermeture (12), encastré à demeure et possédant des caractéristiques de ressort, est disposé au-dessous des passages à huile (9, 13) et l'élément de fermeture (12) encastré à demeure est chargé avec une pression d'amortissement persistante sur le passage à huile (13) qu'il ferme et régule la pression d'amortissement.

2. Vérin différentiel selon la revendication 1, avec lequel l'élément de fermeture (12) encastré à demeure est réalisé sous la forme d'une rondelle élastique.

3. Vérin différentiel (1) selon la revendication 1, avec lequel le dispositif d'amortissement possède une chambre d'amortissement (11) à une extrémité de la deuxième zone de pression (4) qui se trouve à l'opposé du piston (2) et un tenon d'amortissement (10) faisant saillie sur le piston (2) en direction de la deuxième zone de pression, le tenon d'amortissement (10) et la chambre d'amortissement (11) étant configurés de telle sorte que dans une portion (D) de la zone de déplacement, le tenon d'amortissement (10) fait saillie dans la chambre d'amortissement (11) et sépare ainsi la deuxième zone de pression (4) de la chambre d'amortissement (11).

4. Vérin différentiel selon la revendication 3, avec lequel le tenon d'amortissement (10) et la chambre d'amortissement (11) sont configurés de telle sorte qu'après la pénétration du tenon d'amortissement (10) dans la chambre d'amortissement (11), il reste un interstice résiduel (8) qui présente une section transversale de passage prédéfinie.

5. Vérin différentiel selon la revendication 4, avec lequel la section transversale de passage prédéfinie est choisie de telle sorte qu'elle exerce un amortissement maximal prédéfini contre le déplacement du piston (2).

6. Vérin différentiel selon la revendication 5, avec lequel sur le fond de la chambre d'amortissement (11), l'élément de fermeture (15), lequel est mobile dans le sens de déplacement du piston (2), ferme ou ferme partiellement la section transversale du passage (9) lors d'un déplacement du piston (2) en direction de la deuxième zone de pression (4) dans la portion (D) de la zone de déplacement.

7. Vérin différentiel selon la revendication 5, avec lequel la section transversale d'au moins l'un des passages à huile (9) est configurée de telle sorte que l'élément de fermeture (15) mobile ferme ce passage à huile (9) lors d'un déplacement du piston en direction de la deuxième zone de pression et la section transversale d'au moins l'un des autres passages à huile (13) est configurée de telle sorte que l'élément de fermeture (15) mobile ne ferme pas entièrement ce passage à huile (13), ce qui forme un interstice (16) à travers lequel s'écoule le liquide hydraulique.

8. Vérin différentiel selon l'une des revendications 5 à 7, avec lequel l'élément de fermeture (15) mobile et le passage à huile (9) qui est partiellement ou entièrement fermé par l'élément en forme de disque (15) agissent comme un clapet anti-retour.

9. Mécanisme d'entraînement hydromécanique pour un commutateur de puissance à haute tension équipé d'un vérin différentiel (1) selon l'une des revendications précédentes.
